# EUROPEAN PATENT SPECIFICATION

(11) **EP 0 943 657 B1**
(45) Date of publication and mention of the grant of the patent: **14.07.2004**
(21) Application number: 99101773.2
(22) Date of filing: 12.02.1999
(51) Int. Cl.: C08L 33/06, C08K 5/37, C08K 5/00

(54) **Acrylic elastomer composition**
Acrylelastomerzusammensetzung
Composition d' élastomère acrylique

(30) Priority: 19.03.1998 JP 9085898
(43) Date of publication of application: 22.09.1999
(73) Proprietor: Nippon Mektron, Limited, Minato-ku Tokyo (JP)
(72) Inventor: Moriyama, Iwao, Takahagi city, Ibaraki (JP); Kuzumaki, Yoshihiro, Kitaibaraki city, Ibaraki (JP); Sato, Takeshi, Fujisawa city, Kanagawa (JP)
(74) Representative: HOFFMANN - EITLE

(56) References cited:
- EP-A- 0 653 457
- FR-A- 2 285 428
- US-A- 3 335 117

## Description

### BACKGROUND OF THE INVENTION

### 1. FIELD OF THE INVENTION

The present invention relates to an acrylic elastomer composition, and more particularly to an acrylic elastomer composition capable of giving sealing materials, etc. having distinguished compression set characteristics.

### 2. DESCRIPTION OF RELATED ART

With technical advances in the fields of automobiles, household electrical appliances, various machines, etc., various characteristics are required for rubber materials for use in parts relating thereto. In acrylic elastomers for use in the field requiring a heat resistance, a cold resistance and an oil resistance at the same time, particularly when used as sealing materials such as O-rings, packings, etc., the requirements for the compression set characteristics are increasing year by year.

To improve the scorch resistance without lowering the normal state physical properties, heat resistance, compression set characteristics, etc., the present applicant have so far proposed an acrylic elastomer composition, which comprises a carboxyl group-containing acrylic elastomer, a polyfunctional isocyanate compound as a vulcanizing agent and a guanidine, a quaternary onium compound, a tertiary amine or a tertiary phosphine as a vulcanization accelerater (Japanese Patent Application No. 9-279958), or to improve the scorch resistance stability and compression set characteristics the present applicant have also proposed an acrylic elastomer composition, which comprises an unsaturated dicarboxylic acid monoalkyl ester-copolymerized acrylic elastomer, a diamine compound as a vulcanizing agent, a guanidine compound as a vulcanization accelerater and a benzothiazolyl-sulfeneamide-typed compound as a vulcanization accelerater (Japanese Patent Application No. 9-316300).

### SUMMARY OF THE INVENTION

An object of the present invention is to provide an acrylic elastomer composition capable of giving sealing materials, etc. having improved compression set characteristics.

The object of the present invention can be attained by an acrylic elastomer composition, which comprises a carboxyl group-containing acrylic elastomer and a mercaptobenzimidazole, where a combination of a vulcanizing agent and a vulcanization accelerater such as (1) a combination of a polyfunctional isocyanate compound and at least one of a guanidine, a quaternary onium compound, a tertiary amine and a tertiary phosphine, or (2) a combination of a diamine compound and at least one of a guanidine, 1,8-diazabicyclo[5,4,0] undecene-7, 1,5-diazabicyclo[4,3,0] nonene-5 and their salts is used as a vulcanizing system for the composition.

### DETAILED DESCRIPTION OF THE INVENTION

Acrylic elastomers having carboxyl groups as crosslinking sites can be obtained by copolymerization of at least one of an alkyl acrylate and an alkoxyalkyl acrylate as a main component with a carboxyl group-containing unsaturated compound.

The alkyl acrylate for use in the present invention includes alkyl acrylates having an alkyl group of C₁ to C₈, such as methyl acrylate, ethyl acrylate, n- or isopropyl acrylate, n- or isobutyl acrylate, n-amyl acrylate, n-hexyl acrylate, 2-ethylhexyl acrylate, n-octyl acrylate, 2-cyanoethyl acrylate, etc., where ethyl acrylate and n-butyl acrylate are preferable from the viewpoint of the balance between the cold resistance and the oil resistance.

The alkoxyalkyl acrylate for use in the present invention includes alkoxyalkyl acrylates having an alkoxyalkyl group of C₂ to C₈, such as methoxymethyl acrylate, ethoxymethyl acrylate, 2-methoxyethyl acrylate, 2-ethoxyethyl acrylate, 2-butoxyethyl acrylate, etc., where 2-methoxyethyl acrylate and 2-ethoxyethyl acrylate are preferable from the viewpoint of the balance between the cold resistance and the oil resistance.

About 20 to about 99.9% by weight, preferably about 40 to about 99% by weight, of alkyl acrylate or alkoxyalkyl acrylate, on the basis of the monomer mixture, is subjected to copolymerization reaction, where a rate of copolymerization can reach to about 90% or more and thus the monomer mixture proportion will correspond substantially to a copolymerization proportion.

The carboxyl group-containing unsaturated compound for use in the present invention includes unsaturated monocarboxylic acids such as acrylic acid, methacrylic acid, etc.; aliphatic unsaturated dicarboxylic acids such as maleic acid, fumaric acid, itaconic acid, citraconic acid, etc.; and aliphatic unsaturated dicarboxylic acid monoalkyl esters such as monomethyl maleate, monoethyl maleate, monopropyl maleate, monoisopropyl maleate, mono-n-butyl maleate, monoisobutyl maleate, monomethyl fumarate, monoethyl fumarate, monopropyl fumarate, monoisopropyl fumarate, mono-n-butyl fumarate, monomethyl itaconate, monoethyl itaconate, monopropyl itaconate, mono-n-butyl itaconate, monomethyl citraconate, monoethyl citraconate, monopropyl citraconate, monoisopropyl citraconate, mono-n-butyl citraconate, monoisobutyl citraconate, etc., where mono-n-butyl maleate, monoethyl fumarate and mono-n-butyl fumarate are preferable. About 0.1 to about 15% by weight, preferably about 1 to about 10% by weight, of carboxyl group-containing unsaturated compound, on the basis of the monomer mixture, is subjected to copolymerization reaction. Below about 0.1% by weight vulcanization will be unsatisfactory, resulting in lowered compression set characteristics, whereas above about 15% by weight scorching is liable to occur.

The aliphatic unsaturated dicarboxylic acid monoalkyl ester copolymerized acrylic elastomer can be further copolymerized with other vinyl or olefin monomers such as styrene, vinyltoluene, α-methylstyrene, vinylnaphthalene, acrylonitrile, methacrylonitrile, acrylamide, vinyl acetate, cyclohexyl acrylate, benzyl acrylate, 2-hydroxyethyl acrylate, 4-hydroxybutyl acrylate, isoprene, butadiene, piperylene(1,3-pentadiene), 1,4-pentadiene, etc. within such a range as not to inhibit the characteristics (not more than about 30% by weight).

To improve the kneading processability, extrusion processability, etc., not more than about 1% by weight of a polyfunctional unsaturated monomer or oligomer such as ethylene glycol di(meth)acrylate, propylene glycol di(meth)acrylate, 1,4-butadiol di(meth)acrylate, 1,6-hexanediol di(meth)acrylate, 1,9-nonanediol di(meth)acrylate, neopentyl glycol di(meth)-acrylate, tetraethylene glycol di(meth)acrylate, tripropylene glycol di(meth)-acrylate, polypropylene glycol di(meth)acrylate, bisphenol A ethylene oxide adduct diacrylate, dimethylol tricyclodecane diacrylate, glycerine dimethacrylate, 3-acryloyloxyglycerine monomethacrylate, etc. can be subjected to the copolymerization reaction, if required.

In the vulcanizing system (1), a polyfunctional isocyanate compound as a vulcanizing agent is added to the acrylic elastomer as a copolymer of the above-mentioned components together with a vulcanization accelerator.

The polyfunctional isocyanate compound for use in the present invention includes, for example, o-toluylene diisocyanate, naphthylene-1,5-diisocyanate, diphenylmethane diisocyanate, triphenylmethane triisocyanate, xylylene diisocyanate, tris(p-isocyanatophenyl)thiophosphite, polymethylenepolyphenyl diisocyanate, chlorophenyl diisocyanate, dimethoxydiphenyl diisocyanate, dimethyldiphenylene diisocyanate, tetramethyldiphenylene diisocyanate, diphenyldiphenylne diisocyanate, dichlorodiphenylene diisocyanate, dimethoxydiphenylene diisocyanate, phenylene diisocyanate, toluene diisocyanate, transvinylene diisocyanate, N,N' -(4,4' -dimethyl-3,3' -diphenyldiisocyanato) uredione, 4,4' ,4'' - trimethyl-3,3' ,3'' -triisocyanato-2,4,6-triphenyl cyanurate, hexamethylene diisocyanate, isophorone diisocyanate, trimethylhexamethylene diisocyanate, blocked isocyanate, dicyclohexyl methane diisocyanate, etc.

About 0.1 to about 10 parts by weight, preferably about 0.2 to about 5 parts by weight, of at least one of these polyfunctional isocyanate compounds is used on the basis of 100 parts by weight of the acrylic elastomer. Below about 0.1 part by weight no satisfactory compression set characteristics will be obtained, whereas above about 10 parts by weight the normal state physical properties and heat resistance will be lowered

The vulcanization accelerator to be used together with the polyfunctional isocyanate compound as a vulcanizing agent includes at least one of a guanidine, a quaternary onium salt, a tertiary amine and a tertiary phosphine. The guanidine for use in the present invention includes those given herein later.

Quaternary onium salt can be represented by the following general formula:

(R₁R₂R₃R₄N)⁺X⁻

or

(R₁R₂R₃R₄P)⁺X⁻

where R₁ to R₄ are each an alkyl group having 1 to 25 carbon atoms, an alkoxy group, an aryl group, an alkylaryl group, an aralkyl group or a polyoxyalkylene group, or two or three of which may form a heterocyclic structure together with N or P; and X⁻ is an anion such as Cl⁻, Br⁻, I⁻, HSO₄⁻, H₂PO₄, RCOO, ROSO₂; RSO; ROPO₂H; CO₃⁻, etc.

Specifically, it includes quaternary ammonium salts such as tetrabutylammonium bromide, tetrabutylammonium chloride, tetrabutylammonium iodide, tetraethylammonium bromide, tetraethylammonium chloride, tetraethylammonium iodide, n-dodecyltrimethylammonium bromide, octa-decyltrimethylammonium bromide, trimethylbenzylammonium bromide, cetyldimethylbenzylammonium chloride, cetyl-pyridinium bromide, cetyl-pyridinium sulfate, tetraethylammonium acetate, trimethylbenzylammonium benzoate, trimethylbenzylammonium borate, 5-benzyl-1,5-diaza-bicyclo[4,3,0]-5-nonenium chloride, 5-benzyl-1,5-diazabicyclo[4,3,0]-5-nonenium tetrafluoroborate, etc.; quaternary phosphonium salts such as tetraphenylphosphonium chloride, benzyltriphenylphosphonium bromide, benzyltriphenylphosphonium chloride, triphenylmethoxymethylphosphonium chloride, triphenylmethylcarbonylmethylphosphonium chloride, triphenylethoxycarbonylmethylphosphonium chloride, trioctylbenzylphosphonium chloride, trioctylmethylphosphonium chloride, trioctylethylphosphonium acetate, tetraoctylphosphonium chloride, trioctylethylphosphonium dimethylphosphate, etc.

The tertiary amine for use in the present invention includes, for example, triethylamine, tributylamine, diethylcyclohexylamine, dimethyllaurylamine, tetramethylethylenediamine, tetramethylpropylenediamine, tetramethylhexamethylenediamine, N,N-dimethylbenzylamine, triphenylamine, triethylenediamine, hexamethylenetetramine, pentamethyldiethylenetriamine, hexamethyltriethylenetetramine, 1,8-diazabicyclo[5,4,0]undecene-7, N,N-dimethylaniline, N,N-diethylaniline, pyridine and its substituted compounds, pyrrole and its substituted compounds, methylmorpholine, ethylmorpholine, dimethylpiperazine, diethylpiperazine, etc.

The tertiary phosphine for use in the present invention includes, for example, triphenylphosphine, tri(methylphenyl) phosphine, etc.

About 0.5 to about 15 parts by weight, preferably about 1 to about 10 parts by weight, of the vulcanization accelerator is used on the basis of 100 parts by weight of the acrylic elastomer. Below about 0.5 parts by weight vulcaniczation will be unsatisfactory, resulting m lowered compression set characteristics, whereas above about 15 parts by weight vulcanization will be inhibited, resulting in lowered compression set characteristics.

In the vulcanization system (2), a diamine compound as a vulcanizing agent is added to the carboxyl group-containing acrylic elastomer together with a vulcanization accelerator.

The diamine compound for use in the present invention as a vulcanizing agent includes preferably aromatic diamine compounds such as 4,4' -methylenedianiline, m-phenylenediamine, 4,4' -diaminodiphenyl ether, p-phenylenediamine, p,p' -ethylenedianiline, 4,4' -(p-phenylene-diisopropylidene)dianiline, 4,4 ' -(m-phenylenediisopropylidene)dianiline, 3,4' -diaminodiphenyl ether, 4,4' -diaminodiphenylsulfone, 2,2-bis[4-(4-aminophenoxy)phenyl]propane, bis[4-(4-aminophenoxy)phenyl]sulfone, bis[4-(3-aminophenoxy)phenyl]sulfone, 4,4' -bis(4-aminophenoxy)bisphenol, bis[4-(4-aminophenoxy)phenyl]ether, 2,2-bis[4(4-aminophenoxy)phenyl]-hexafluoropropane, 1,4-bis(4-aminophenoxy)benzene, 1,3-bis(4-aminophenoxy)benzene, etc., where p-diamino-substituted compounds are preferable. Besides these aromatic diamine compounds, aliphatic diamine compounds such as hexamethylenediamine, hexamethylenediamine carbamate, hexamethylenediamme-cinnamaldehyde adduct, hexamethylenediamine benzoate salt, N,N-dicinnamylidene-1,6-hexanediamine, diamino-modified siloxane, etc., alicyclic diamine compounds such as 4,4' - methylenebiscyclohexylamine, bis(4-amino-3-methyldicydohexyl)methane, 4,4' -methylenebiscyclohexylamine-cinnamaldehyde adduct, etc., or diamine-modified polysiloxanes, etc. can be also used.

About 0.1 to about 5 parts by weight, preferably about 0.2 to about 4 parts by weight, more preferably about 0.5 to about 3 parts by weight, of at least one of these diamine compounds as a vulcanizing agent can be used on the basis of 100 parts by weight of the carboxyl group-containing acrylic elastomer. Below about 0.1 part by weight the vulcanization will be unsatisfactory, resulting in failure to obtain an effect on the improvement of compression set characteristics, whereas above about 5 parts by weight scorching is liable to occur.

The vulcanization accelerator to be used together with the diamine compound as a vulcanizing agent includes, for example, a guanidine, 1,8-diazabicyclo[5,4,0]undecene-7, 1,5-diazabicyclo[4,3,0]nonene-5 or their salts. The guanidine includes, for example, guanidine, aminoguanidine, 1-phenylguanidine, 1,3-diphenylguanidine, triphenylguanidine, 1,1,3,3-tetramethylguanidine, 1,1,3,3-tetraethylguanidine, 1-benzyl-2,3-dimethylguanidine, 1,3-di-o-tolylguanidine, n-decylguanidine, methylolguanidine, dimethylolguanidine, cyanoguanidine, 1,6-guadinohexane, guanylurea, biguanide, 1-o-tolylbiguanide, dicatecholborate di-o-tolylguanidine salt, etc., where diphenylguanidine and 1-o-tolylguanidine are preferable.

About 0.1 to about 10 parts by weight, preferably about 0.3 to about 6 parts by weight, more preferably about 0.5 to about 4 parts by weight, of at least one of these vulcanization accelerators can be used on the basis of 100 parts by weight of the carboxyl group-containing acrylic elastomer. Below about 0.1 part by weight the vulcanization will be unsatisfactory, resulting in lowered compression set characteristics, whereas above about 10 parts by weight the vulcanization will be inhibited, resulting in failure to obtain satisfactory compression set characteristics.

The mercaptobenzimidazole for use as a characteristic component of the present acrylic elastomer composition includes, for example, 2-mercaptobenzimidazole, 2-mercaptomethylbenzimidazole, etc. About 0.1 to about 5 parts by weight, preferably about 0.5 to about 3 parts by weight, of the mercaptobenzimidazole can be used on the basis of 100 parts by weight of the carboxyl group-containing acrylic elastomer. Below about 0.1 part by weight no desired effect can be obtained on the improvement of compression set characteristics, whereas above about 5 parts by weight no more remarkable effect can be obtained, rendering the composition uneconomical.

In addition to the foregoing components, it is furthermore preferable to add about 0.5 to about 5 parts by weight of an antioxidant and about 0.1 to about 5 parts by weight of a lubricant to 100 parts by weight of the carboxyl group-containing acrylic elastomer. The antioxidant resister includes amine-type ones, typically 4,4-bis(α,α-dimethylbenzyl)diphenylamine, etc., or phenol-type ones, typically 2,2'-methylenebis(4-methyl-6-tert.-butylphenol), etc. The lubricant includes stearic acid, phosphate ester compounds, organic silicone compounds, higher fatty acid esters, monoamide type, higher fatty acids, etc.

The acrylic elastomer composition comprising the foregoing components can be further admixed, if required, with a reinforcing agent, a filler, a stabilizer, a plasticizer, a processing aid, etc., and the composition can be prepared by an open roll, Banbury mixer, a kneader, etc. The resulting composition is vulcanized by press vulcanization at about 150° to about 200°C for about 1 to about 30 minutes and by oven vulcanization (secondary vulcanization) at about 50° to about 180°C for about 1 to about 16 hours. The vulcanization molding can be carried out by compression molding, injection molding, transfer molding, etc.

The present acrylic elastomer composition has particularly distinguished compression set characteristics and also has no metal corrosion problem, and is thus effectively used as vulcanization molding materials such as sealing materials for gaskets, O-rings, packings, oil seals, etc. or for various hoses, etc. Even sealing materials with small wire diameters can have good compression set characteristics according to the present invention.

It is well known that the mercaptobenzimidazole as the characteristic component of the present acrylic elastomer composition has been so far used as an antioxidant resister in the rubber industry, but its action has contributed to prevention of oxidation due to various radicals generated at a high temperature or to stabilization of the resulting peroxides, thereby controlling changes in the breaking strength or breaking elongation before and after the aging. On the other hand, the present invention is based on quite a novel finding that the compression set characteristics of vulcanization products can be improved by adding a mercaptobenzimidazole to the carboxyl group-containing acrylic elastomer.

### PREFERRED EMBODIMENTS OF THE INVENTION

The present invention will be described in detail below, referring to Reference Examples, Examples and Comparative Examples, where "parts" are by weight.

### REFERENCE EXAMPLE 1

150 parts of water, 5.5 parts of sodium lauryl sulfate and 100 parts of a monomer mixture consisting of 10 parts of ethyl acrylate, 46 parts of n-butyl acrylate, 40 parts of 2-methoxyethyl acrylate and 4 parts of monoethyl maleate were charged into a separable flask provided with a thermometer, a stirrer, a nitrogen gas inlet tube and a depressurizing device, and the interior oxygen was completely removed from the flask by repetition of degassing and nitrogen gas flushing. Then, 0.002 parts of sodium formaldehyde sulfoxylate and 0.005 parts of tert.-butyl hydroperoxide were added thereto to initiate polymerization reaction at room temperature. The reaction was continued until the conversion rate of polymerization reached to 90%. The resulting aqueous latex was coagulated with an aqueous sodium chloride solution, followed by water washing and drying, whereby monoethyl maleate-copolymerized acrylic elastomer (acrylic elastomer A) was obtained.

### EXAMPLE 1

| | |
|---|---|
| Acrylic elastomer A | 100 parts |
| Stearic acid | 1 part |
| 4,4' -bis(α,α-dimethylbenzyl)diphenylamine | 2 parts |
| FEF carbon black | 65 parts |
| Hexamethylene diisocyanate | 1 part |
| Di-o-tolylguanidine | 4 parts |
| 2-mercaptomethylbenzimidazole | 1 part |

The foregoing components were kneaded in an open roll, and the resulting composition was subjected to press vulcanization at 180°C for 8 minutes and then to secondary vulcanization in gear over at 175°C for 4 hours.

The resulting O-ring (3.5mm in wire diameter) was subjected to compression set determination at 150°C for 70 hours under 25% compression according to JIS K-6301.

### COMPARATIVE EXAMPLE 1

In Example 1, no 2-mercaptomethylbenzimidazole was used.

### EXAMPLES 2 TO 4 AND COMPARATIVE EXAMPLES 2 TO 4

In Example 1, the following components were used, as shown in the following Table 1, besides acrylic elastomer A, stearic acid, 4,4' -bis(α,α-dimethylbenzyl)diphenylamine and FEF carbon black. In Example 2 and Comparative Example 2, the amounts of 4,4' -bis(α,α-dimethylbenzyl) diphenylamine were changed to 3 parts.

**Table 1**

| Component (parts) | Ex.2 | Comp. Ex.2 | Ex.3 | Comp. Ex.3 | Ex.4 | Comp. Ex.4 |
|---|---|---|---|---|---|---|
| Hexamethylene diisocyanate | 0.6 | 0.6 | 0.6 | 0.6 | | |
| Dimethyldiphenylene diisocyanate | | | | | 0.8 | 0.8 |
| Di-o-tolylguanidine | | | | | 2 | 2 |
| Dimethylbenzylamine | 1 | 1 | | | | |
| Cetyldimethylbenzylammonium chloride | | | 3 | 3 | | |
| 2-mercaptomethylbenzimidazole | 1 | | 1 | | 1 | |

Results of compression set determination in the foregoing Examples 1 to 4 and the corresponding Comparative Examples 1 to 4 are shown in the following Table 2.

**Table 2**

| Ex. No. | Compression set (%) | Comp. Ex. No. | Compression set (%) |
|---|---|---|---|
| 1 | 25 | 1 | 29 |
| 2 | 19 | 2 | 23 |
| 3 | 21 | 3 | 26 |
| 4 | 20 | 4 | 24 |

### EXAMPLES 5 TO 7 AND COMPARATIVE EXAMPLES 5 TO 8

In Example 1, the following components were used, as shown in the following Table 3, besides acrylic elastomer A, stearic acid, 4,4' -bis(α,α-dimethylbenzyl)diphenylamine and FEF carbon black. In Comparative Example 6, the amount of 4,4' -bis(α,α-dimethylbenzyl)diphenylamine was changed to 3 parts.

**Table 3**

| Component (parts) | Example No. | | | Comp. Ex. No. | | | |
|---|---|---|---|---|---|---|---|
| | 5 | 6 | 7 | 5 | 6 | 7 | 8 |
| 4,4' -diaminodiphenyl ether | 0.7 | 0.7 | 0.7 | 0.7 | 0.7 | 0.7 | 0.7 |
| Di-o-tolylguanidine | 2 | 2 | 2 | 2 | 2 | 2 | 2 |
| Ethylene bisstearoamide | 1 | 1 | 1 | | | 1 | 1 |
| 2-mercaptobenzimidazole | 1 | 2 | | | | | |
| 2-mercaptomethylbenzimidazole | | | 1 | | | | |
| Tributylthiourea | | | | | | 1 | |
| Tris(nonylphenol)phosphite | | | | | | | 1 |

Results of compression set determination in the foregoing Examples 5 to 7 and Comparative Examples 5 to 8 are shown in the following Table 4.

**Table 4**

| Example | Compression set (%) |
|---|---|
| Example 5 | 12 |
| Example 6 | 11 |
| Example 7 | 12 |
| Comp. Ex. 5 | 17 |
| Comp. Ex. 6 | 18 |
| Comp. Ex. 7 | 20 |
| Comp. Ex. 8 | 18 |

### EXAMPLES 8 TO 16

In Example 1, the following components were used, as shown in the following Table 5, besides acrylic elastomer A, stearic acid, 4,4' -bis(α,α-dimethylbenzyl)diphenylamine and FEF carbon black.

**Table 5**

| Component (parts) | Example No. | | | | | | | | |
|---|---|---|---|---|---|---|---|---|---|
| | 8 | 9 | 10 | 11 | 12 | 13 | 14 | 15 | 16 |
| 4,4' -diaminodiphenyl ether | 1 | 0.7 | 0.7 | | | | | 1 | 1 |
| Di-o-tolylguanidine | | 2 | 2 | 2 | 2 | 0.5 | 0.5 | | |
| 2-mercaptomethylbenzimidazole | 1 | 1 | 1 | 1 | 1 | 1 | 1 | 1 | 1 |
| 2,2-bis[4-(4-aminophenoxy)phenyl]hexafluoropropane | | | | 2 | | | | | |
| 4,4' -(p-phenylenediisopropylidene) dianiline | | | | | 1.2 | | | | |
| Hexamethylenediamine carbamate | | | | | | 1 | | | |
| N,N-dicinnamylidene-1,6-hexanediamine | | | | | | | 1 | | |
| Dicatechol borate di-o-tolylguanidine salt | | | | | | | | 3.9 | |
| N-cyclohexyl-2-benzothiazolyl sulphenamide | | 0.5 | | | | | | | 0.5 |
| N-oxyethylene-2-benzothiazolyl sulphenamide | | | 1 | | | | | | |
| 1,8-diazabicyclo[5,4,0]undecene-7 | | 0.2 | | | | | | | |
| 1,5-diazabicyclo[4,3,0]nonene-5 | | | | | | | | | 0.2 |

### COMPARATIVE EXAMPLE 9

In Example 8, no 2-mercaptomethylbenzimidazole was used.

### COMPARATIVE EXAMPLE 10

In Example 9, no 2-mercaptomethylbenzimidazole was used.

### COMPARATIVE EXAMPLE 11

In Example 10, no 2-mercaptomethylbenzimidazole was used.

### COMPARATIVE EXAMPLE 12

In Example 11, no 2-mercaptomethylbenzimidazole was used.

### COMPARATIVE EXAMPLE 13

In Example 12, no 2-mercaptomethylbenzimidazole was used.

### COMPARATIVE EXAMPLE 14

In Example 13, no 2-mercaptomethylbenzimidazole was used.

### COMPARATIVE EXAMPLE 15

In Example 14, no 2-mercaptomethylbenzimidazole was used.

### COMPARATIVE EXAMPLE 16

In Example 15, no 2-mercaptomethylbenzimidazole was used.

### COMPARATIVE EXAMPLE 17

In Example 16, no 2-mercaptomethylbenzimidazole was used.

Results of compression set determination in the foregoing Examples 8 to 16 and the corresponding Comparative Examples 9 to 17 are shown in the following Table 6.

**Table 6**

| Example No. | Compression set (%) | Comp. Ex. No. | Compression set (%) |
|---|---|---|---|
| 8 | 17 | 9 | 21 |
| 9 | 13 | 10 | 18 |
| 10 | 12 | 11 | 19 |
| 11 | 11 | 12 | 17 |
| 12 | 11 | 13 | 16 |
| 13 | 20 | 14 | 25 |
| 14 | 20 | 15 | 26 |
| 15 | 19 | 16 | 24 |
| 16 | 18 | 17 | 23 |

### REFERENCE EXAMPLES 2 TO 9

Copolymerization reaction was carried out in the same manner as in Reference Example 1, using 100 parts of a monomer mixture as shown in the following Table 7, and unsaturated dicarboxylic acid monoalkyl ester-copolymerized acrylic elastomers (acrylic elastomers B to I) were obtained.

**Table 7**

| | Ref. Ex. No. | | | | | | | |
|---|---|---|---|---|---|---|---|---|
| | 2 | 3 | 4 | 5 | 6 | 7 | 8 | 9 |
| | | | | | | | | |

| [Monomer mixture: parts] | | | | | | | | |
|---|---|---|---|---|---|---|---|---|
| Ethyl acrylate | 47.5 | 41 | 41 | 47 | 45 | 65.5 | 30 | |
| n-Butyl acrylate | 30 | 30 | 30 | 30 | 30 | 32 | | 47.5 |
| 2-Methoxyethyl acrylate | 20 | 20 | 20 | 20 | 22.5 | | 67 | 50 |
| Styrene | | | 3 | | | | | |
| Monoethyl fumarate | 2.5 | | | | | | | |
| Mono-n-butyl fumarate | | | | | 2.5 | 2.5 | 3 | 2.5 |
| Monoethyl maleate | | 9 | | | | | | |
| Mono-n-butyl maleate | | | 6 | | | | | |
| Monomethyl itaconate | | | | 3 | | | | |

| [Acrylic elastomer] | | | | | | | | |
|---|---|---|---|---|---|---|---|---|
| Identification symbol | B | C | D | E | F | G | H | I |

### EXAMPLE 17

| | |
|---|---|
| Acrylic elastomer B | 100 parts |
| Stearic acid | 1 part |
| 4,4' -bis(α,α-dimethylbenzyl)diphenylamine | 2 parts |
| FEF carbon black | 65 parts |
| N,N' -dicinnamylidene-1,6-hexanediamine | 1 part |
| Di-o-tolylguanidine | 4 parts |
| 2-mercaptobenzimidazole | 1 part |

The foregoing components were kneaded and vulcanized in the same manner as in Example 1, and the compression set determination was likewise made.

### COMPARATIVE EXAMPLE 18

In Example 17, no 2-mercaptobenzimidazole was used.

### EXAMPLE 18

In Example 17, acrylic elastomer C was used in place of acrylic elastomer B.

### COMPARATIVE EXAMPLE 19

In Example 18, no 2-mercaptobenzimidazole was used.

### EXAMPLE 19

In Example 17, acrylic elastomer D was used in place of acrylic elastomer B.

### COMPARATIVE EXAMPLE 20

In Example 19, no 2-mercaptobenzimidazole was used.

### EXAMPLE 20

In Example 17, acrylic elastomer E was used in place of acrylic elastomer B.

### COMPARATIVE EXAMPLE 21

In Example 20, no 2-mercaptobenzimidazole was used.

### EXAMPLE 21

In Example 17, acrylic elastomer F was used in place of acrylic elastomer B.

### COMPARATIVE EXAMPLE 22

In Example 21, no 2-mercaptobenzimidazole was used.

### EXAMPLE 22

In Example 17, acrylic elastomer G was used in place of acrylic elastomer B.

### COMPARATIVE EXAMPLE 23

In Example 22, no 2-mercaptobenzimidazole was used.

### EXAMPLE 23

In Example 17, acrylic elastomer H was used in place of acrylic elastomer B.

### COMPARATIVE EXAMPLE 24

In Example 23, no 2-mercaptobenzimidazole was used.

### EXAMPLE 24

In Example 17, the same amount of acrylic elastomer I was used in place of acrylic elastomer B, and the same amount of 4,4' -diaminodiphenyl ether was used in place of N,N' -cinnamylidene-1,6-hexanediamine.

### COMPARATIVE EXAMPLE 25

In Example 24, no 2-mercaptobenzimidazole was used.

### EXAMPLE 25

In Example 17, the same amount of ethylene-acrylic acid ester-maleic acid monoester terpolymer (Vamac HG, a product made by E.I. duPont, USA) was used in place of acrylic elastomer B.

### COMPARATIVE EXAMPLE 26

In Example 25, no 2-mercaptobenzimidazole was used.

Results of compression set determination in the foregoing Examples 17 to 25 and the corresponding Comparative Examples 18 to 26 are shown in the following Table 8.

**Table 8**

| Ex. No. | Compression set (%) | Comp. Ex. No. | Compression set (%) |
|---|---|---|---|
| 17 | 17 | 18 | 21 |
| 18 | 20 | 19 | 25 |
| 19 | 18 | 20 | 21 |
| 20 | 16 | 21 | 20 |
| 21 | 15 | 22 | 20 |
| 22 | 13 | 23 | 18 |
| 23 | 14 | 24 | 19 |
| 24 | 18 | 25 | 22 |
| 25 | 20 | 26 | 26 |

Remarks)
4.4' -bis(α,α-dimethylbenzyl)diphenylamine: Nocrak CD, a product made by Ouchi Shinko Kagaku K.K., Japan.
FEF carbon black: Seast GSO, a product made by Tokai Carbon K.K., Japan.
4.4' -diaminodiphenyl ether: a product by Wakayama Seika K.K., Japan.
Di-o-tolylguanidine: Nocceler DT, a product made by Ouchi Sinko Kagaku K.K., Japan.
2-mercaptobenzimidazole: Nocrac MB, a product made by Ouchi Shinko Kagaku K.K., Japan.
2-mercaptomethylbenzimidazole: Nocrac MM, a product made by Ouchi Shinko K.K., Japan.
Tributylthiourea: Nocrac TBTU, a product made by Ouchi Shinko Kagaku K.K., Japan.
Tris(nonylphenyl)phosphite: Nocrac TNP, a product made by Ouchi Shinko Kagaku K.K., Japan.
2,2-bis[4-(4-aminophenoxy)phenyl]hexafluoropropane: a product made by Wakayama Seika K.K., Japan.
4,4' -(p-phenylenediisopropylidene)dianiline: Bisaniline-P a product made by Mitsui Chemicals, Inc., Japan.
Hexamethylenediamine carbamate: Cheminox AC-6, a product made by NOK, Japan.
N,N' -dicinnamylidene-1,6-hexadiamine: DIAK #3, a product made by E.I. duPont, USA.
Dicatechol borate di-o-tolylguanidine salt: Nocceler PR, a product made by Ouchi Shinko Kagaku K.K., Japan.
N-cyclohexyl-2-benzothiazolyl sulphenamide: Nocceler CZ, a product made by Ouchi Shinko Kagaku K.K., Japan.
N-oxyethylene-2-benzothiazolyl sulphenamide: Nocceler MSA, a product made by Ouchi Shinko Kagaku K.K., Japan.
Ethylene bisstearamide: Armo Wax EBS, a product made by Lion-Akzo K.K., Japan.

## Claims

1. Acrylic elastomer composition, which comprises
(1) an aliphatic unsaturated dicarboxylic acid monoalkyl ester-copolymerised acrylic elastomer which is obtainable by copolymerisation of a monomer mixture containing 0.1 to 15% by weight of a carboxyl group containing unsaturated compound on the basis of the monomer mixture,
(2) a mercaptobenzimidazole in an amount of 0.1 to 5 parts by weight on the basis of 100 parts by weight of the carboxyl group-containing acrylic elastomer,
and either
(3a) a polyfunctional isocyanate compound in an amount of 0.1 to 10 parts by weight on the basis of 100 parts by weight of the carboxyl group-containing acrylic elastomer as a vulcanising agent, and
(4a) a vulcanisation accelerator in an amount of 0.5 to 15 parts by weight based on 100 parts by weight of the carboxyl group-containing acrylic elastomer,
or
(3b) a diamine compound as a vulcanisation agent in an amount of 0.1 to 5 parts by weight based on 100 parts by weight of the carboxyl group-containing acrylic elastomer and
(4b) 0.1 to 10 parts by weight of a vulcanisation accelerator based on 100 parts by weight of the carboxyl group-containing acrylic elastomer.

2. An acrylic elastomer composition according to claim 1, wherein a polyfunctional isocyanate compound is present as a vulcanising agent (3a) and at least one of a guanidine, a quaternary onium salt, a tertiary amine and a tertiary phosphine as a vulcanisation accelerator are contained as the vulcanisation accelerator (4a).

3. An acrylic elastomer composition according to claim 1, wherein a diamine compound is contained as a vulcanising agent (3b) and at least one of a guanidine, 1,8-diazabicyclo[5,4,0]undecene-7, 1,5-diazabicyclo[4,3,0]nonene-5 and their salts are contained as a vulcanisation accelerator (4b).

4. Use of the acrylic elastomer composition according to any one of claims 1 to 3 for the preparation of a sealing material.

5. Vulcanised acrylic elastomer composition, obtainable by a process comprising the step of vulcanizing the acrylic elastomer composition according to any one of claims 1 to 3.

6. Sealing material containing the vulcanised acrylic elastomer composition according to claim 5.

## Patentansprüche

1. Acrylische Elastomerzusammensetzung, umfassend
(1) ein aus einem aliphatischen ungesättigten Dicarbonsäuremonoalkylester copolymerisiertes acrylisches Elastomer, das erhältlich ist durch Copolymerisation einer Monomerenmischung, enthaltend 0,1 bis 15 Gew.%, basierend auf der Monomerenmischung, einer Carboxylgruppen enthaltenden ungesättigten Verbindung,
(2) ein Mercaptobenzimidazol in einer Menge von 0,1 bis 5 Gew.-Teilen, basierend auf 100 Gew.-Teilen des Carboxylgruppen enthaltenden acrylischen Elastomers,
und entweder
(3a) eine polyfunktionelle Isocyanatverbindung in einer Menge von 0,1 bis 10 Gew.-Teilen, basierend auf 100 Gew.-Teilen des Carboxylgruppen enthaltenden acrylischen Elastomers als Vulkanisationsmittel, und
(4a) einen Vulkanisationsbeschleuniger in einer Menge von 0,5 bis 15 Gew.-Teilen, basierend auf 100 Gew.-Teilen des Carboxylgruppen enthaltenden acrylischen Elastomers,
oder
(3b) eine Diaminverbindung als Vulkanisationsmittel in einer Menge von 0,1 bis 5 Gew.-Teilen, basierend auf 100 Gew.-Teilen des Carboxylgruppen enthaltenden acrylischen Elastomers, und
(4b) 0,1 bis 10 Gew.-Teile eines Vulkanisationsbeschleunigers, basierend auf 100 Gew.-Teilen des Carboxylgruppen enthaltenden acrylischen Elastomers.

2. Acrylische Elastomerzusammensetzung gemäss Anspruch 1, worin die polyfunktionelle Isocyanatverbindung als Vulkanisationsmittel (3a) vorliegt und zumindest eines von einem Guanidin, einem quaternären Oniumsalz, einem tertiären Amin und einem tertiären Phosphin als Vulkanisationsbeschleuniger enthalten ist, als Vulkanisationsbeschleuniger (4a).

3. Acrylische Elastomerzusammensetzung gemäss Anspruch 1, worin eine Diaminverbindung als Vulkanisationsmittel (3b) enthalten ist und zumindest eines aus einem Guanidin, 1,8-Diazabicyclo[5,4,0]-undecen-7, 1,5-Diazabicyclo[4,3,0] nonen-5 und deren Salzen als Vulkanisationsbeschleuniger (4b) enthalten sind.

4. Verwendung der acrylischen Elastomerzusammensetzung gemäss irgendeinem der Ansprüche 1 bis 3 zur Herstellung eines Dichtungsmaterials.

5. Vulkanisierte acrylische Elastomerzusammensetzung, erhältlich durch ein Verfahren, umfassend den Schritt des Vulkanisierens der acrylischen Elastomerzusammensetzung gemäss irgendeinem der Ansprüche 1 bis 3.

6. Dichtungsmaterial, enthaltend die vulkanisierte acrylische Elastomerzusammensetzung gemäss Anspruch 5.

## Revendications

1. Composition d'élastomère acrylique, qui comprend
(1) un élastomère acrylique copolymérisé avec un ester monoalkyle d'acide dicarboxylique insaturé aliphatique qui est susceptible d'être obtenu par copolymérisation d'un mélange monomère contenant de 0,1 à 15% en poids d'un composé insaturé contenant un ou des groupes carboxyle, sur la base du mélange monomère,
(2) un mercaptobenzimidazole dans une quantité de 0,1 à 5 parties en poids sur la base de 100 parties en poids de l'élastomère acrylique contenant un ou des groupes carboxyle,
et soit
(3a) un composé isocyanate polyfonctionnel dans une quantité de 0,1 à 10 parties en poids sur la base de 100 parties en poids de l'élastomère acrylique contenant un ou des groupes carboxyle comme agent de vulcanisation, et
(4a) un accélérateur de vulcanisation dans une quantité de 0,5 à 15 parties en poids sur la base de 100 parties en poids de l'élastomère acrylique contenant un ou des groupes carboxyle,
soit
(3b) un composé diamine comme agent de vulcanisation dans une quantité de 0,1 à 5 parties en poids sur la base de 100 parties en poids de l'élastomère acrylique contenant un ou des groupes carboxyle et
(4b) 0,1 à 10 parties en poids d'un accélérateur de vulcanisation sur la base de 100 parties en poids de l'élastomère acrylique contenant un ou des groupes carboxyle.

2. Composition d'élastomère acrylique selon la revendication 1, dans laquelle un composé isocyanate polyfonctionnel est présent comme un agent de vulcanisation (3a), et au moins l'un d'une guanidine, d'un sel d'onium quaternaire, d'une amine tertiaire et d'une phosphine tertiaire comme un accélérateur de vulcanisation sont contenus comme l'accélérateur de vulcanisation (4a).

3. Composition d'élastomère acrylique selon la revendication 1, dans laquelle un composé diamine est présent comme un agent de vulcanisation (3b) et au moins l'un d'une guanidine, de 1,8-diazabicyclo[5,4,0]undécène-7, de 1,5-diazabicyclo[4,3,0]nonène-5 et de leurs sels sont contenus comme un accélérateur de vulcanisation (4b).

4. Utilisation de la composition d'élastomère acrylique selon l'une quelconque des revendications 1 à 3 pour la préparation d'un matériau d'étanchéité.

5. Composition d'élastomère acrylique vulcanisée, qui est susceptible d'être obtenue selon un procédé comprenant l'étape de vulcaniser la composition d'élastomère acrylique selon l'une quelconque des revendications 1 à 3.

6. Matériau d'étanchéité contenant la composition d'élastomère acrylique vulcanisée selon la revendication 5.
